# FASCICULE DE BREVET EUROPEEN

(11) **EP 2 825 814 B1**
(45) Date de publication et mention de la délivrance du brevet: **11.05.2016**
(21) Numéro de dépôt: 13710448.5
(22) Date de dépôt: 11.02.2013
(51) Int. Cl.: F17C 13/04

(54) **ROBINET POUR RÉCIPIENT DE STOCKAGE, RÉCIPIENT MUNI D'UN TEL ROBINET ET UTILISATION CORRESPONDANTE**
HAHN FÜR EINEN LAGERBEHÄLTER, BEHÄLTER MIT EINEM SOLCHEN HAHN UND ENTSPRECHENDE VERWENDUNG
TAP FOR A STORAGE CONTAINER, CONTAINER PROVIDED WITH SUCH A TAP, AND CORRESPONDING USE

(30) Priorité: 14.03.2012 FR 1252282
(43) Date de publication de la demande: 21.01.2015
(73) Titulaire: L'Air Liquide Société Anonyme pour l'Etude et l'Exploitation des Procédés Georges Claude, 75007 Paris (FR)
(72) Inventeur: ROBERGE, Guillaume, F-38300 Maubec (FR); ALLIDIERES, Laurent, F-38410 Saint Martin D'uriage (FR); ZSIGMOND, Zsolt, F-95580 Margency (FR)
(74) Mandataire: De Cuenca, Emmanuel Jaime
(86) Numéro de dépôt international: PCT/FR2013/050277
(87) Numéro de publication internationale: WO 2013/135983

(56) Documents cités:
- US-A- 5 188 017
- US-A1- 2003 066 836
- US-A1- 2003 164 195
- US-A1- 2004 261 866
- US-A1- 2005 103 382

## Description

La présente invention concerne un robinet pour récipient de stockage, un récipient muni d'un tel robinet et une utilisation correspondante.

L'invention concerne plus particulièrement un robinet, notamment pour récipient de stockage de gaz sous pression, comprenant un corps muni d'une entrée de gaz destinée à être reliée au volume de stockage d'un récipient, un circuit de soutirage formé dans le corps et comprenant une extrémité amont destinée à être reliée fluidiquement au volume de stockage d'un récipient et une extrémité aval destinée à être reliée fluidiquement sélectivement avec un organe de soutirage de gaz, un circuit de remplissage formé dans le corps et comprenant une première extrémité destinée à être reliée sélectivement à un organe de remplissage du récipient et une seconde extrémité destinée à être reliée au volume de stockage du récipient, le circuit de soutirage comprenant un clapet d'isolation et un organe de détente de pression du gaz soutiré à une pression déterminée fixe ou réglable, le robinet comprenant également un organe de commande manuelle du déplacement du clapet d'isolation, l'organe de commande étant déplaçable sélectivement dans une première position et dans une seconde position, dans sa première position, l'organe de commande disposant le clapet d'isolation dans une position d'ouverture du circuit de soutirage, dans sa seconde position, l'organe de commande disposant le clapet d'isolation dans une position de fermeture du circuit de soutirage.

L'invention concerne notamment un robinet de soutirage et/ou de remplissage pour récipient de stockage de fluide sous pression, ainsi qu'un ensemble comprenant un tel robinet et d'un organe de soutirage.

Les réservoirs de gaz sous pression, notamment les réservoirs d'hydrogène gazeux stocké à des pressions comprises entre 200 et 1000bar, nécessitent des robinets permettant de contrôler de façon fiable les opérations de soutirage de gaz.

Les documents WO2007048954A1 et EP0747796 décrivent des exemples de robinets pour réservoirs de gaz sous pression.

Le document US20050103392, considéré comme représentant l'art antérieur le plus proche décrit un robinet comportant deux vannes distinctes à commandes respectivement manuelle et pilotée à distance par solénoïde.

La présente invention vise à proposer un robinet de gaz ayant des fonctionnalités permettant de s'adapter à différentes utilisations.

A cette fin, le robinet selon l'invention, par ailleurs conforme à la définition générique qu'en donne le préambule ci-dessus, est essentiellement caractérisé en ce que le robinet comprend en outre, dans le corps, un circuit de commande du déplacement sélectif du clapet d'isolation vers sa première position d'ouverture du circuit de soutirage, le circuit de commande comprenant une première extrémité reliée au clapet et une seconde extrémité sélectivement raccordable à un actionneur d'un organe de soutirage de gaz, pour commander électriquement sélectivement le déplacement du clapet vers sa position d'ouverture du circuit de soutirage.

De cette façon, la gestion du soutirage peut être commandée manuellement et/ou automatiquement (électriquement). Le robinet peut ainsi adopter trois modes de fonctionnements distincts parfaitement sécurisés.

Ces modes de commande du clapet d'isolation sont parfaitement différenciés et sûrs vis-à-vis de l'extérieur et notamment des utilisateurs du robinet.

Par ailleurs, des modes de réalisation de l'invention peuvent comporter l'une ou plusieurs des caractéristiques suivantes :
- le clapet d'isolation et l'organe de détente de pression du gaz soutiré sont des éléments distincts et disposés en série dans le circuit de soutirage,
- le clapet d'isolation constitue également un organe de détente de pression sélectif du gaz soutiré, le clapet d'isolation étant un clapet du type piloté sélectivement de manière proportionnelle par un actionneur distinct pour réguler sélectivement la pression de sortie du gaz soutiré,
- le clapet d'isolation constitue également un organe de détente de pression sélectif du gaz soutiré, le clapet d'isolation étant un clapet du type piloté sélectivement de manière proportionnelle par un actionneur distinct pour réguler sélectivement la pression de sortie du gaz soutiré,
- le circuit de commande comprend un passage formé dans le corps du robinet et débouchant à l'extérieur du corps un niveau d'un orifice d'entrée, l'orifice d'entrée étant conformé pour accueillir, dans le corps, un poussoir mobile appartenant à un actionneur de préférence électrique d'un organe de soutirage de gaz, de façon à déplacer sélectivement le clapet vers sa position d'ouverture,
- le passage du circuit de commande situé entre l'orifice d'entrée et le clapet d'isolation comprend au moins une pièce de transmission d'effort mobile pour transmettre un effort d'un poussoir pénétrant dans l'orifice d'entrée vers le clapet d'isolation, de sorte que le déplacement du clapet d'isolation vers sa position d'ouverture est réalisée de façon indirecte via la au moins une pièce de transmission actionnée par un poussoir,
- lorsque l'organe de commande est dans sa première position, le clapet d'isolation est bloqué mécaniquement dans sa position d'ouverture du circuit de soutirage, quel que soit l'état du circuit de commande et l'état d'un éventuel actionneur électrique relié au circuit de commande,
- lorsque l'organe de commande est dans sa seconde position, le clapet d'isolation est bloqué mécaniquement dans sa position de fermeture du circuit de soutirage, quel que soit l'état du circuit de commande et l'état d'un éventuel actionneur électrique relié au circuit de commande,
- l'organe de commande est déplaçable dans une troisième position neutre dans laquelle le clapet d'isolation est déplaçable entre ses positions d'ouverture et de fermeture du circuit de soutirage selon l'état du circuit de commande et d'un éventuel actionneur électrique relié au circuit de commande,
- le robinet comporte un organe de rappel sollicitant par défaut le clapet d'isolation vers sa position de fermeture du circuit de soutirage,
- le clapet d'isolation est disposé en amont de l'organe de détente sur le circuit de soutirage,
- le corps contient, dans le circuit de commande, une butée sélectivement mobile située entre le clapet d'isolation et l'orifice d'entrée,
- lorsque l'organe de commande est dans sa première position cet organe dispose une butée mobile dans une position fixe et stable bloquant mécaniquement le clapet d'isolation en position ouverte et assurant un découplage entre, d'une part, un actionneur électrique d'un organe de soutirage et, d'autre part, du clapet d'isolation,
- lorsque l'organe de commande est dans sa seconde position il dispose une butée mobile dans une position fixe et stable formant un écran empêchant la transmission d'effort entre, d'une part, un actionneur électrique d'un organe de soutirage et, d'autre part, le clapet d'isolation, de façon à laisser le clapet d'isolation sujet uniquement à l'effort de son organe de rappel le contraignant vers sa position de fermeture,
- lorsque l'organe de commande est dans sa troisième position, cet organe de commande dispose une butée mobile dans une position modifiable, notamment via un poussoir commandé par l'actionneur électrique,
- lorsque l'organe de commande est dans sa troisième position et que le clapet d'isolation est disposé dans sa position d'ouverture par l'actionneur électrique, un déplacement ultérieur de l'organe de commande dans sa seconde position contraint mécaniquement le clapet d'isolation à passer dans sa position de fermeture en appliquant sur ledit clapet d'isolation un effort supérieur à celui exercé par l'actionneur,
- lorsque l'organe de commande est dans sa troisième position et que l'actionneur électrique est inactivé, c'est-à-dire que l'actionneur électrique ne commande pas le déplacement du clapet d'isolation vers sa position d'ouverture, le clapet d'isolation est dans sa position fermée, à partir de cette position, le déplacement de l'organe de commande dans sa première position contraint mécaniquement le clapet d'isolation à passer dans sa position d'ouverture,
- le corps contient, dans le circuit de commande, un axe mobile située entre l'orifice d'entrée et la butée mobile, une première extrémité de l'axe mobile étant prévue pour être poussée par un poussoir commandé par l'actionneur électrique, une seconde extrémité de l'axe mobile étant prévue pour pousser par réaction la butée mobile,
- la troisième position neutre de l'organe de commande est située entre les première et seconde positions,
- le récipient de stockage de gaz sous pression comprend une bouteille de gaz sous pression ou un cadre de plusieurs bouteilles sous pression, le robinet pouvant être commun à plusieurs bouteilles,
- le robinet comprend un manomètre de mesure monté sur le corps et mesurant la pression dans le circuit de soutirage, de préférence en amont du clapet d'isolation,
- le manomètre est du type électronique et comprend une logique électronique pilotant au moins l'un parmi : un organe de transmission de données à distance, un organe de réception de données à distance, une mémoire, un afficheur, une alarme,
- la première extrémité du circuit de soutirage comprend un raccord muni d'un clapet qui peut être déplacé dans une position d'ouverture pour assurer le remplissage du récipient ou un soutirage sans passer via l'organe de détende de pression,
- l'organe de soutirage de gaz et l'extrémité aval du circuit de soutirage du robinet sont munis de raccords fluidiques conjugués du type à connexion rapide,
- l'organe de détente de pression comprend un détendeur pour détendre le gaz à une pression déterminée comprise entre quatre et quinze bar par exemple,
- le corps est muni d'une extrémité de montage tel qu'une portion cylindrique ou conique filetée destinée à être disposée au niveau de l'orifice d'un récipient de stockage de gaz sous pression,
- le clapet d'isolation peut être actionné vers sa position d'ouverture directement par un poussoir d'un organe de soutirage de gaz,
- l'ensemble comprend un dispositif de capteur, notamment de type inductif, située sur le robinet et/ou sur l'organe de soutirage pour détecter la position d'accrochage ou non du robinet avec l'organe de soutirage,
- en cas de rupture ou casse de l'organe de rappel du clapet d'isolation, le clapet est contraint vers sa position de fermeture,
- l'ensemble peut être utilisé selon un mode manuel lorsque l'organe de soutirage ne comprend qu'un raccord rapide conjugué des organes d'attache mécaniques du robinet,
- le clapet et le raccord de remplissage de l'extrémité du circuit de remplissage sont actionnables en ouverture via un raccord extérieur conjugué pour permettre un soutirage de gaz à haute pression,
- tout ou partie des clapets peuvent être du type piloté pour permettre une régulation commandée (électrique) de la pression soutirée,
- le clapet d'isolation est du type piloté de manière proportionnelle par l'actionneur (électro-aimant) pour réguler la pression de sortie du gaz soutiré à la place de l'organe de détente. Ceci permet d'obtenir une meilleure précision sur la pression de sortie du gaz via une boucle électrique de régulation et permet également de pouvoir changer de pression de consigne du gaz soutiré en fonction des besoins des différentes applications,
- le clapet de maintien d'une pression résiduelle dans la bouteille est conformé pour s'ouvrir en permanence tant que sa pression de tarage n'est pas atteinte afin de ne pas créer de perte de charge néfaste à la vidange complète du récipient,

De préférence l'ouverture du clapet d'isolation n'est pas brutale mais est réalisée progressivement pour éviter une montée brutale de pression en aval de ce clapet d'isolation.

Par exemple, le clapet d'isolation est ouvert selon une suite d'ouvertures/fermetures successives. Les ouvertures successives sont de préférence de plus en plus longues.

Par exemple, le clapet est ouvert selon un signal à créneaux (éventuellement sinusoïdal).

Par exemple le clapet est ouvert puis fermé puis ouvert puis fermé etc...selon des temps d'ouvertures compris entre 5ms et 100ms, ces temps d'ouvertures étant de préférence croissants.

Ceci permet d'installer la haute pression progressivement en aval du clapet, notamment lorsque la pression en amont du clapet est très élevée (entre 500 et 1000bar par exemple).

L'invention concerne également un récipient de stockage de gaz sous pression comprenant un orifice relié à un robinet conforme à l'une quelconque des caractéristiques ci-dessus ou ci-après.

L'invention concerne également un ensemble comprenant un robinet conforme à l'une quelconque des caractéristiques ci-dessus ou ci-après et un organe de soutirage de gaz muni d'un circuit de gaz interne, l'organe de soutirage étant sélectivement raccordable mécaniquement au robinet pour réaliser une liaison fluidique du circuit de gaz interne avec l'extrémité aval du circuit de soutirage du robinet, le robinet et l'organe de soutirage comportant des organes d'attache mécaniques conjugués et amovibles pour permettre leur accrochage de façon séparable, l'organe de soutirage comprenant un actionneur pour commander sélectivement le déplacement du clapet d'isolation vers sa position d'ouverture du circuit de soutirage, en position d'accrochage du robinetet de l'organe de soutirage, l'actionneur étant relié à la seconde extrémité du circuit de commande pour commander sélectivement le déplacement du clapet d'isolation vers sa position d'ouverture selon l'état d'alimentation de l'actionneur..

Selon d'autres particularités possibles :
- l'organe de soutirage comprend un poussoir commandé par l'actionneur, en position d'accrochage du robinet et de l'organe de soutirage, le poussoir pénétrant sélectivement dans le circuit de commande via la seconde extrémité selon l'état d'alimentation électrique de l'actionneur, pour déplacer le clapet d'isolation vers sa position d'ouverture,
- l'actionneur électrique comprend au moins l'un parmi : un électroaimant, une bobine d'induction,

L'invention concerne également une utilisation d'un tel ensemble dans lequel le robinet possède une entrée reliée fluidiquement au volume de stockage d'un ou plusieurs récipients de gaz sous pression, dans lequel du gaz est soutiré du au moins un récipient via :
- une étape d'accrochage mécanique de l'organe de soutirage sur le robinet via les organes d'attache mécaniques conjugués,
- une étape de déplacement de l'organe de commande manuelle dans une troisième position neutre dans laquelle le clapet d'isolation est déplaçable entre ses positions d'ouverture et de fermeture du circuit de soutirage selon l'état du circuit de commande et du éventuel actionneur électrique relié au circuit de commande,
- une étape d'alimentation électrique dudit actionneur pour déplacer le clapet d'isolation vers sa position d'ouverture du circuit de soutirage.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue schématique et partielle illustrant la structure interne d'un robinet monté sur une bouteille de gaz et raccordé à un organe de soutirage selon un exemple de réalisation de l'invention,
- la figure 2 représente une vue en coupe, schématique et partielle, illustrant la structure et le fonctionnement d'un détail de l'actionnement d'un clapet d'isolation du robinet de la figure 1 selon une forme de réalisation possible,
- les figures 3 à 6 représentent des vues en coupe, schématiques et partielles, illustrant un détail de l'actionnement d'un clapet d'isolation du robinet de la figure 1 selon respectivement, quatre états distincts,
- les figures 7 et 8 représentent des vues en perspectives selon deux orientations distinctes d'un exemple de réalisation possible d'un robinet selon l'invention,
- la figure 9 représente une vue en perspective du robinet des figures 7 et 8 raccordé à un organe de soutirage de gaz.

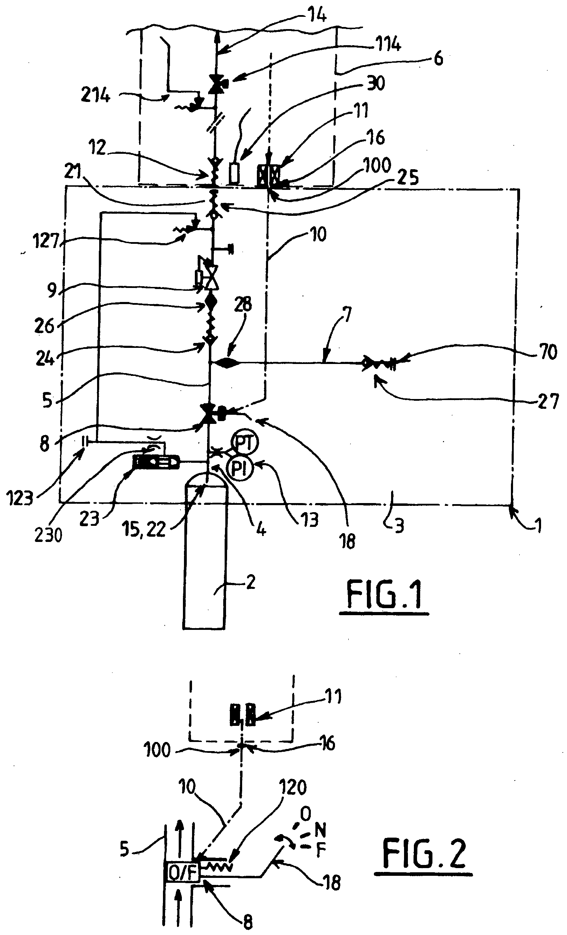

La figure 1 illustre un exemple de réalisation de robinet 1 selon l'invention et plus précisément un robinet 1 à détendeur intégré. Ce robinet 1 est prévu notamment pour être utilisé avec de l'hydrogène gazeux, par exemple à une pression de 700bar. Bien entendu, l'invention pourrait s'appliquer à un robinet sans détendeur intégré (c'est-à-dire un robinet simple ou un robinet avec détendeur amovible).

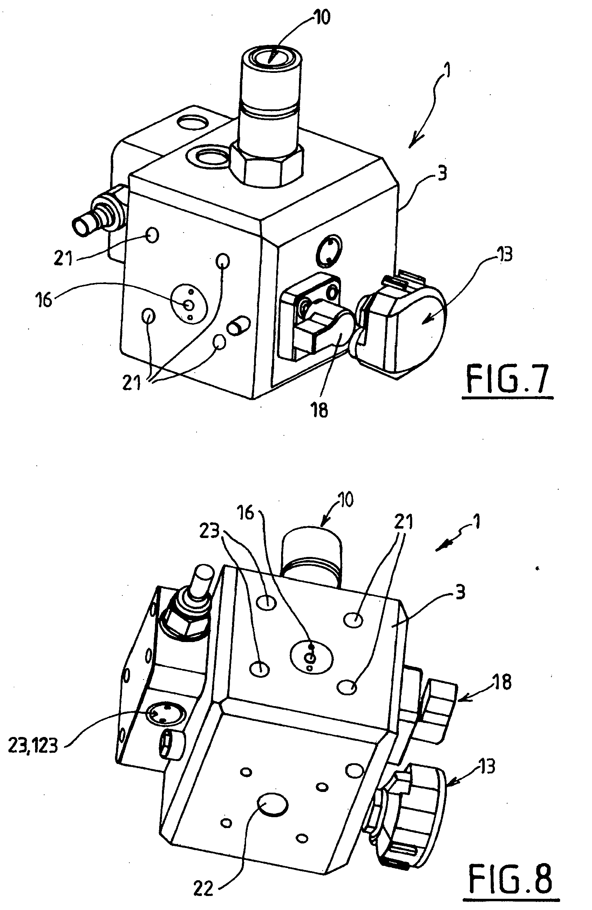

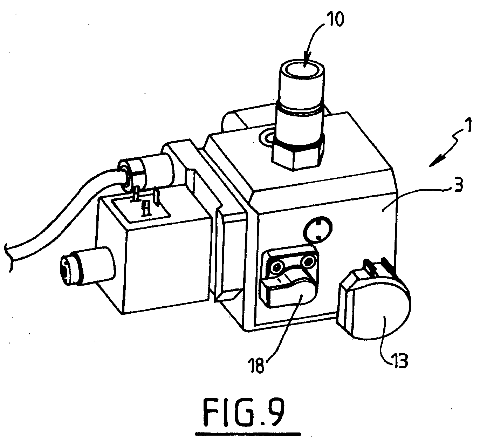

Le robinet 1 comprend un corps 3 muni d'une entrée 22 de gaz. Cette entrée 22 est raccordée au niveau de l'orifice d'un volume de stockage d'un récipient 2. Par exemple, l'entrée 22 de gaz est formée à l'extrémité d'une portion cylindrique ou conique filetée qui est fixée dans le col taraudé d'un récipient 2. Bien entendu cet exemple n'est pas limitatif et, comme représenté aux figures 7 et 9, l'entrée 22 peut être prévue pour recevoir une conduite reliant le robinet 1 à un cadre de plusieurs bouteilles disposées en parallèle (c'est-à-dire que le robinet n'est pas forcément monté dans l'orifice d'un récipient).

Le robinet 1 comprend un circuit 5 de soutirage formé dans le corps 3. Le circuit 5 de soutirage comprend une extrémité amont 15 reliée fluidiquement au volume de stockage du récipient 2 et une extrémité aval 25 destinée à être reliée fluidiquement sélectivement avec un organe 6 de soutirage de gaz (décrit ci-après).

Par exemple, l'extrémité amont 15 du circuit 5 de soutirage coïncide avec l'entrée 22.

Le circuit 5 de soutirage comprend, disposés en série, un clapet 8 d'isolation et un détendeur de pression du gaz conformé pour abaisser la haute pression du réservoir 2 à une pression basse déterminée fixe ou réglable, par exemple entre un bar et 20 bar.

De préférence (et comme représenté), le clapet 8 d'isolation est disposé en amont du détendeur 9 (c'est-à-dire avant le détendeur 9 dans le sens d'un flux de gaz sortant du réservoir 2).

Le robinet 1 comprend également, monté sur le corps 3, un organe 18 de commande manuelle du déplacement du clapet 8 d'isolation. L'organe 18 de commande est déplaçable manuellement sélectivement dans une première position et dans une seconde position. Dans sa première position, l'organe 18 de commande contraint mécaniquement le clapet 8 d'isolation dans une position d'ouverture du circuit 5 de soutirage, dans sa seconde position, l'organe 18 de commande contraint mécaniquement le clapet 8 d'isolation dans une position de fermeture du circuit 5 de soutirage. Comme représente aux figures 7 à 9, l'organe 18 de commande est par exemple rotatif relativement au corps 3 et forme par exemple un bouton ou levier pivotant qui coopère mécaniquement avec le clapet 8 d'isolation.

Le robinet 1 comporte de préférence un organe 120 de rappel tel qu'un ressort sollicitant par défaut le clapet 8 d'isolation vers sa position de fermeture du circuit 5 de soutirage (cf. figure 2).

Comme représenté également, le robinet 1 comprend de préférence également une soupape 23 de sécurité (« TPRD ») disposée en amont du clapet 8 d'isolation pour évacuer vers l'extérieur 123 le contenu du réservoir 2 en cas de situation dangereuse (température et/ou pression excessive).

De préférence, et comme représenté à la figure 1, un orifice calibré 230 est disposé en aval de la soupape 23 de sécurité. De préférence, le fusible thermique 23 n'est pas traversé par le gaz mais obture sélectivement la sortie de gaz vers l'orifice calibré 230. Cette architecture permet de changer le diamètre de passage de l'orifice calibré sans toucher à l'étanchéité du fusible thermique 23. Ce changement d'orifice 230 peut être utile selon la taille du récipient 2 par exemple, notamment pour réduire la longueur du jet gazeux (enflammé ou non) qui sera libéré lors de l'activation du fusible thermique 23.

Pour des récipients 2 de 20 litres et à une pression de 700 bar la taille de l'orifice 230 est par exemple comprise en 0,05 m et 0,5mm pour limiter un jet de gaz à 4,3 m. En revanche, pour un récipients de 140 litres l'orifice 230 aura plutôt une taille de l'ordre de 1 mm, la longueur du jet sera de l'ordre de 8,6m.

Comme illustré, le robinet 1 peut comporter un manomètre 13 mesurant la pression PT en amont du clapet 8 d'isolation et comprenant de préférence un afficheur PI. De préférence, le manomètre 13 est du type électronique et comprend une logique électronique pilotant au moins l'un parmi : un organe de transmission de données à distance, un organe de réception de données à distance, une mémoire, un afficheur, une alarme. Par exemple le manomètre est du type de celui décrit dans le document WO2005093377A1.

Comme visible à la figure 1, le robinet 1 peut comprendre sur le circuit 5 de soutirage, entre le clapet 8 d'isolation et le détendeur 9, un clapet de pression résiduelle 24 et/ou un filtre 26.

En aval du détendeur 9, le circuit 5 de soutirage peut comprendre une vanne 127 de sécurité permettant de décharger un flux vers l'extérieur, par exemple au niveau de la sortie de la soupape de sécurité 23.

L'extrémité aval du circuit 5 de soutirage peut comporter ensuite un raccord fluidique, par exemple un raccord rapide muni d'un clapet à fermeture automatique, permettant une connexion fluidique à un organe 6 de soutirage muni d'un raccord conjugué.

Le corps 3 du robinet 1 comporte de préférence des organes d'attache (par exemple des trous 21 borgnes, cf. figure 7) destinés à coopérer avec des organes 12 conjugués (par exemple des pions non représentés) formés sur l'organe 6 de soutirage. Ces organes 12, 21 conjugués permettent le positionnement et/ou l'accrochage de l'organe 6 sur le robinet 1 (de façon séparable).

Le robinet 1 comprend également un circuit 7 de soutirage formé de préférence dans le corps 3 et comprenant une première extrémité 70 destinée à être reliée sélectivement à un organe de remplissage du récipient 2 et une seconde extrémité 15 destinée à être reliée au volume de stockage du récipient 2. Par exemple, la second extrémité, 15 du circuit de soutirage 7 coïncide avec l'extrémité amont 15 du circuit 5 de soutirage. C'est-à-dire que le circuit 7 de remplissage possède une portion commune avec le circuit 5 de soutirage. Comme illustré, le circuit 7 de remplissage peut comprendre un filtre 28. L'extrémité du circuit 7 de remplissage définit par exemple sur le corps 3 un raccord 70 de remplissage muni par exemple d'un clapet à fermeture automatique, par exemple un raccord de type à connexion rapide.

Comme illustré schématiquement aux figures 1 et 2, le robinet 1 comprend en outre, dans le corps 3, un circuit 10 de commande du déplacement sélectif du clapet 8 d'isolation (en plus de la commande manuelle via l'organe 18 de commande).

Le circuit 10 de commande comprend une première extrémité reliée au clapet 8 et une seconde extrémité 100 sélectivement raccordable à un actionneur 11 électrique et/ou pneumatique d'un organe 6 de soutirage de gaz monté sur le robinet 1.

Le circuit 10 de commande est prévu pour commander de préférence électriquement sélectivement le déplacement du clapet 8 vers sa position d'ouverture (O) ou fermeture (F) du circuit 5 de soutirage (cf. « O/F », figure 2).

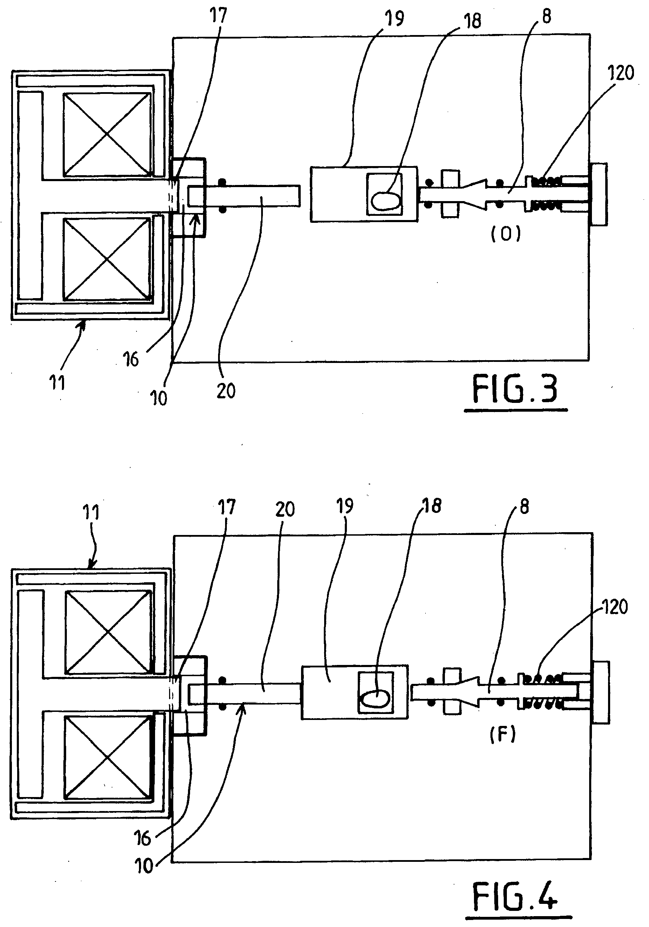

Par exemple, le circuit 10 forme un passage dans le corps 3 du robinet 1 et débouche à l'extérieur du corps 3 un niveau d'un orifice 16 d'entrée (cf. figures 1 à 8). Cet orifice 16 d'entrée est par exemple conformé pour accueillir, dans le corps 3 (c'est-à-dire dans le passage 10), une extrémité d'un poussoir 17 mobile appartenant à un actionneur 11 d'un organe 6 de soutirage de gaz (cf. figures 3 à 6).

De préférence, le passage 10 situé entre l'orifice 16 d'entrée et le clapet 8 d'isolation comprend au moins une pièce 19, 20 de transmission d'effort mobile pour transmettre un effort du poussoir 17 pénétrant dans l'orifice 16 vers le clapet 8 d'isolation. C'est-à-dire que le déplacement du clapet 8 d'isolation vers sa position d'ouverture est réalisée de façon indirecte via la pièce 19, 20 de transmission actionnée par un poussoir 17 (cf. figures 3 à 6).

Plus précisément, le corps 3 peut contenir, dans le circuit 10 de commande entre l'orifice 16 d'entrée et le clapet 8, un axe 20 mobile et une butée 19 sélectivement mobile située entre le clapet 8 d'isolation l'axe 20 mobile.

La butée 19 forme un tiroir qui coopère sélectivement (directement ou indirectement) avec une portion de l'organe 18 de commande manuelle. C'est-à-dire que la position de la butée 19 et son aptitude à se déplacer est contrôlée par l'organe 18 de commande manuelle.

Une première extrémité de l'axe 20 mobile est ainsi prévue pour être poussée par un poussoir 17 commandé par l'actionneur 11 électrique, une seconde extrémité de l'axe 20 mobile étant prévue pour pousser, en réaction, la butée 19 mobile qui agit ou non sur le clapet 8 à l'encontre de l'effort du ressort 120.

Lorsque l'organe 18 de commande est dans sa première position (« O » figure 2), le clapet 8 d'isolation est bloqué mécaniquement dans sa position d'ouverture du circuit 5 de soutirage, quel que soit l'état du circuit 10 de commande et l'état d'un éventuel actionneur 11 relié au circuit 10 de commande. Par exemple, comme représenté à la figure 3, lorsque l'organe 18 de commande est dans sa première position, cet organe 18 dispose la butée 19 mobile dans une position fixe et stable bloquant mécaniquement le clapet 8 d'isolation en position ouverte (O), contre l'effort du ressort 120. Cette position de la butée 19 assure un découplage mécanique entre d'une part, le poussoir 17 et l'axe 20 et, d'autre part, le clapet 8.

En revanche, lorsque l'organe 18 de commande est dans sa seconde position (F, cf. figure 2), le clapet 8 d'isolation est bloqué mécaniquement dans sa position de fermeture du circuit 5 de soutirage, quel que soit l'état du circuit 10 de commande et l'état d'un éventuel actionneur électrique relié au circuit 10 de commande. Par exemple, lorsque l'organe 18 de commande est dans sa seconde position (« F », cf. figure 2), cet organe 18 dispose la butée 19 mobile dans une position fixe et stable formant un « écran » empêchant la transmission d'effort entre, d'une part, l'actionneur 11 électrique, le poussoir et l'axe 20 et, d'autre part, le clapet 8 d'isolation. De plus, dans cette position la butée 19 laisse le clapet 8 d'isolation sujet uniquement à l'effort de son organe 120 de rappel le contraignant ainsi vers sa position de fermeture (F, cf. figure 4).

De préférence, l'organe 18 de commande est déplaçable dans une troisième position neutre (« N » cf. figure 2) dans laquelle le clapet 8 d'isolation est déplaçable entre ses positions d'ouverture et de fermeture du circuit 5 de soutirage selon l'état du circuit 10 de commande et d'un éventuel actionneur 11 relié au circuit 10 de commande.

Par exemple, la troisième position neutre de l'organe 18 de commande est située entre les première et seconde positions (cf. figure 2).

Lorsque l'organe 18 de commande est dans sa troisième position, cet organe 18 de commande dispose une butée 19 mobile dans une position modifiable, notamment via le poussoir 10 commandé par l'actionneur 11.

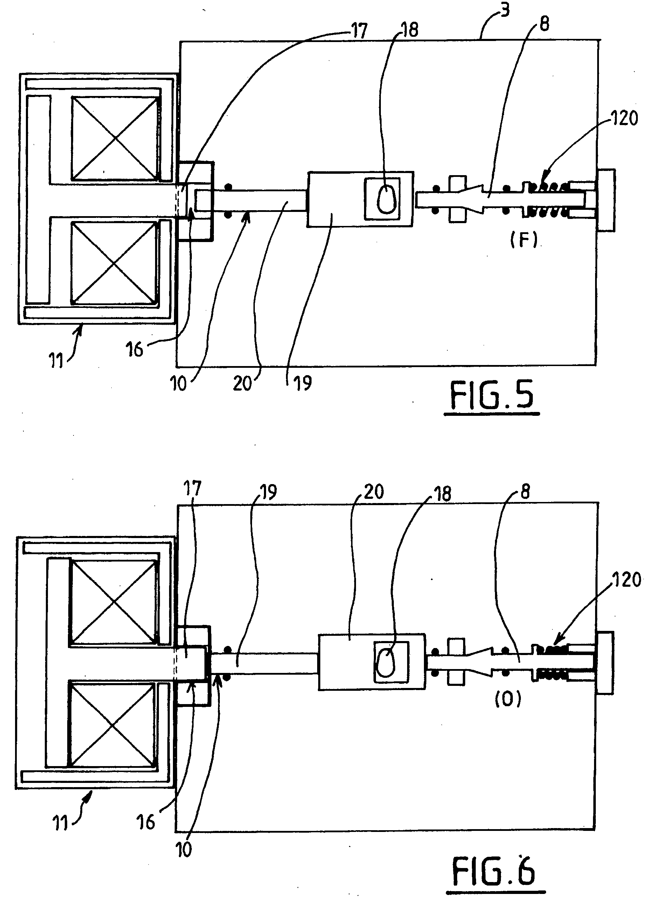

C'est-à-dire que, lorsque l'organe 18 de commande est dans sa troisième position et que l'actionneur 11 est inactivé (alimentation électrique nulle ou basse et poussoir 17 rétracté dans l'actionneur 11), le clapet 8 d'isolation est dans sa position fermée par l'action du ressort 120 (cf. figure 5).

Lorsque l'organe 18 de commande est dans sa troisième position et que l'actionneur 11 est activé (alimentation électrique déterminée, par exemple à une tension de 24V et le poussoir 17 faisant saillie hors de l'actionneur 11), le clapet 8 d'isolation est poussé dans sa position d'ouverture (cf. figure 6).

En revanche, de préférence, lorsque l'organe 18 de commande est dans sa troisième position et que le clapet 8 d'isolation est placé dans sa position d'ouverture par l'actionneur 11, le déplacement de l'organe 18 de commande dans sa seconde position contraint mécaniquement le clapet 8 d'isolation à revenir dans sa position de fermeture en appliquant sur ledit clapet 8 d'isolation un effort supérieur à celui exercé par l'actionneur 11.

De même, lorsque l'organe 18 de commande est dans sa troisième position et que l'actionneur 11 est inactivé, c'est-à-dire que l'actionneur 11 ne commande pas le déplacement du clapet 8 d'isolation vers sa position d'ouverture (le clapet 8 d'isolation est dans sa position fermée), le déplacement de l'organe 18 de commande dans sa première position contraint mécaniquement le clapet 8 d'isolation à passer dans sa position d'ouverture.

On comprend donc aisément que le robinet 1 (et en particulier l'état du selon clapet 8 d'isolation) peut être commandé de façon manuelle (via l'organe 18 de commande) ou de façon automatisée (via l'actionneur 11). De préférence et comme illustré, l'actionneur 11 est intégré dans un organe 6 de soutirage distinct du robinet 1. Bien entendu, selon une variante qui n'est pas préférée, le passage 100 peut abriter uniquement une liaison électrique qui viendrait transmettre une commande à un actionneur électrique (électrovanne) et/ou pneumatique situé au niveau du corps 3 du robinet 1.

Au contraire, selon l'architecture préférée, l'actionneur 11 (électroaimant, bobine d'alimentation, pneumatique ou autre) est situé uniquement sur l'organe 6 de soutirage qui peut faire partie d'une application fixe utilisant le gaz soutiré.

De préférence, le robinet 1 est conçu pour pouvoir délivrer également du gaz à haute pression (sans passer par le détendeur 9). Par exemple, le raccord de l'extrémité du circuit 7 de remplissage est muni d'un clapet 27 qui peut être déplacé dans une position d'ouverture pour assurer le remplissage du récipient 2 ou un soutirage sans passer via l'organe 9 de détende de pression. C'est-à-dire que le circuit 7 de remplissage permet également le soutirage à haute pression (et lorsque le clapet 8 d'isolation est en position ouverte).

Le robinet 1 comprend de préférence également, par exemple sur le circuit 5 de soutirage, un système de protection (un clapet de surdébit à trou calibré par exemple) contre les débits trop importants en cas par exemple de rupture d'une tuyauterie en aval. En variante, en cas de rupture de la tuyauterie aval, la pression chute et le clapet de détente du détendeur 9 vient en butée sur une pièce équipée d'un orifice calibré de faible diamètre à son axe afin de permettre le réarmement automatique du détendeur dès que la fuite est stoppée.

En mode manuel, l'utilisateur peut venir se connecter via un connecteur rapide sur la sortie (extrémité 25) du circuit de soutirage. En disposant le clapet 8 d'isolation en position ouverte via l'organe 18 de commande, l'utilisateur peut soutirer du gaz à la pression basse déterminée par le détendeur 9 (par exemple 10 bar).

En mode automatique ou semi-automatique, un organe 6 de soutirage est raccordé au robinet 1 (cf. figures 1 et 9). L'organe 6 de soutirage est par exemple situé à l'extrémité d'un flexible qui amène le gaz soutiré à une application, par exemple une pile à combustible. Une attache mécanique 12, 21 positionne l'organe 6 de soutirage sur le robinet 1. Le circuit 14 interne de gaz de l'organe 6 de soutirage se raccorde fluidiquement à l'extrémité aval 25 du circuit 5 de soutirage du robinet 1. Comme représenté, le circuit 14 interne de gaz de l'organe 6 de soutirage peut comprendre au moins une vanne 114 et une soupape 214 de sécurité et le cas échéant un capteur 30 de position.

Dans cette position, l'actionneur 11 de l'organe 6 de soutirage se place devant la seconde extrémité 100 du circuit 10 de commande pour commander sélectivement le déplacement du clapet 8 d'isolation vers sa position d'ouverture selon la mise sous tension ou non de l'actionneur 11 électrique.

De préférence, un système de capteur(s) 30, par exemple inductif(s), permet de détecter le couplage entre l'organe 6 de soutirage et le robinet 1 (capteurs sur le corps 3 et/ou sur l'organe 6 de soutirage). Cette information peut être transmise à l'application receveuse de gaz (en aval de l'organe 6 de soutirage) de façon filaire ou sans fil.

En effet, l'application telle qu'un système de pile à combustible peut le cas échéant être raccordé à plusieurs sources de gaz (hydrogène). Une gestion peut être ainsi mise en oeuvre pour connaître à tout instant l'identité du récipient 2 qui fournit le gaz et la quantité de gaz dans les autres récipients raccordés. Cette fonction peut être réalisée via un manomètre 13 électronique tel que décrit précédemment. Ce manomètre 13 communique de préférence sans fil avec un récepteur avec des signaux de courte portée (1 à 2 mètres par exemple) de sorte à ne pas se confondre avec les émetteurs d'autres récipients adjacents.

La commande automatique du clapet 8 d'isolation permet de fermer immédiatement le clapet 8 correspondant au récipient signalant un problème de sécurité.

Selon une variante possible le clapet 8 d'isolation est un clapet du type piloté de manière proportionnelle par l'actionneur 11, pour réguler la pression de sortie du gaz soutiré à la place de l'organe de 9 de détente. C'est-à-dire qu'un organe 9 de détente 9 distinct peut être omis, le clapet 8 assurant les fonctions d'isolation et de détente. Ceci permet d'obtenir une meilleure précision sur la pression de sortie du gaz, par exemple via une boucle électrique de régulation et de contrôle du clapet 8. Ceci permet également de pouvoir changer de pression de consigne du gaz soutiré en fonction des besoins des différentes applications.

On conçoit donc aisément que le robinet permet un fonctionnement manuel ou automatisé en toute sécurité, soit pour une bouteille de gaz soit pour un ensemble de bouteilles.

## Revendications

1. Robinet, notamment pour récipient (2) de stockage de gaz sous pression, comprenant un corps (3) muni d'une entrée (22) de gaz destinée à être reliée au volume de stockage d'un récipient (2), un circuit (5) de soutirage formé dans le corps (3) et comprenant une extrémité amont (15) destinée à être reliée fluidiquement au volume de stockage d'un récipient (2) et une extrémité aval (25, 22) destinée à être reliée fluidiquement sélectivement avec un organe (6) de soutirage de gaz, un circuit (7) de remplissage formé dans le corps (3) et comprenant une première extrémité (70) destinée à être reliée sélectivement à un organe de remplissage du récipient (2) et une seconde extrémité (15) destinée à être reliée au volume de stockage du récipient (2), le circuit (5) de soutirage comprenant un clapet (8) d'isolation et un organe de détente (9) de pression du gaz soutiré à une pression déterminée fixe ou réglable, le robinet (1) comprenant également un organe (18) de commande manuelle du déplacement du clapet (8) d'isolation, l'organe (18) de commande étant déplaçable sélectivement dans une première position et dans une seconde position, dans sa première position, l'organe (18) de commande disposant le clapet (8) d'isolation dans une position d'ouverture du circuit (5) de soutirage, dans sa seconde position, l'organe (18) de commande disposant le clapet (8) d'isolation dans une position de fermeture du circuit (5) de soutirage, **caractérisé en ce que** le robinet (1) comprend en outre, dans le corps (3), un circuit (10) de commande du déplacement sélectif du clapet (8) d'isolation vers sa première position d'ouverture du circuit (5) de soutirage, le circuit (10) de commande comprenant une première extrémité reliée au clapet (8) et une seconde extrémité (100) sélectivement raccordable à un actionneur (11) de l'organe (6) de soutirage de gaz, pour commander électriquement sélectivement le déplacement du clapet (8) vers sa position d'ouverture du circuit (5) de soutirage.

2. Robinet selon la revendication 1, **caractérisé en ce que** le clapet (8) d'isolation et l'organe (9) de détente de pression du gaz soutiré sont des éléments distincts et disposés en série dans le circuit (5) de soutirage.

3. Robinet selon la revendication 1 ou 2, **caractérisé en ce que** le clapet (8) d'isolation constitue également un organe de détente (9) de pression sélectif du gaz soutiré, le clapet (8) d'isolation étant un clapet du type piloté sélectivement de manière proportionnelle par un actionneur (11) distinct pour réguler sélectivement la pression de sortie du gaz soutiré.

4. Robinet selon l'une quelconque des revendications 1 à 3, **caractérisé en ce que** le circuit (10) de commande comprend un passage formé dans le corps (3) du robinet (1) et débouchant à l'extérieur du corps (3) un niveau d'un orifice (16) d'entrée, l'orifice (16) d'entrée étant_conformé pour accueillir, dans le corps (3), un poussoir (17) mobile appartenant à un actionneur (11) d'un organe (6) de soutirage de gaz, de façon à déplacer sélectivement le clapet (8) vers sa position d'ouverture.

5. Robinet selon la revendication 4, **caractérisé en ce que** le passage (10) du circuit (10) de commande situé entre l'orifice (16) d'entrée et le clapet (8) d'isolation comprend au moins une pièce (19, 20) de transmission d'effort mobile pour transmettre un effort du poussoir (17) pénétrant dans l'orifice (16) d'entrée vers le clapet (8) d'isolation, de sorte que le déplacement du clapet (8) d'isolation vers sa position d'ouverture est réalisée de façon indirecte via la au moins une pièce (19, 20) de transmission actionnée par un poussoir (17).

6. Robinet selon l'une quelconque des revendications 1 à 5, **caractérisé en ce que**, lorsque l'organe (18) de commande est dans sa première position, le clapet (8) d'isolation est bloqué mécaniquement dans sa position d'ouverture du circuit (5) de soutirage, quel que soit l'état du circuit (10) de commande et l'état d'un éventuel actionneur (11) relié au circuit (10) de commande.

7. Robinet selon l'une quelconque des revendications 1 à 6, **caractérisé en ce que**, lorsque l'organe (18) de commande est dans sa seconde position, le clapet (8) d'isolation est bloqué mécaniquement dans sa position de fermeture du circuit (5) de soutirage, quel que soit l'état du circuit (10) de commande et l'état d'un éventuel actionneur relié au circuit (10) de commande.

8. Robinet selon l'une quelconque des revendications 1 à 7, **caractérisé en ce que** l'organe (18) de commande est déplaçable dans une troisième position neutre dans laquelle le clapet (8) d'isolation est déplaçable entre ses positions d'ouverture et de fermeture du circuit (5) de soutirage selon l'état du circuit (10) de commande et d'un éventuel actionneur (11) relié au circuit (10) de commande.

9. Robinet selon l'une quelconque des revendications 1 à 8, **caractérisé en ce qu'**il comporte un organe (120) de rappel sollicitant par défaut le clapet (8) d'isolation vers sa position de fermeture du circuit (5) de soutirage.

10. Récipient de stockage de gaz sous pression comprenant un orifice relié à un robinet (1) conforme à l'une quelconque des revendications 1 à 9.

11. Ensemble comprenant un robinet (1) conforme à l'une quelconque des revendications 1 à 9 et un organe (6) de soutirage de gaz muni d'un circuit (14) de gaz interne, l'organe (6) de soutirage étant sélectivement raccordable mécaniquement au robinet (1) pour réaliser une liaison fluidique du circuit (14) de gaz interne avec l'extrémité aval (25) du circuit (5) de soutirage du robinet (1), le robinet (1) et l'organe (6) de soutirage comportant des organes (12, 21) d'attache mécaniques conjugués et amovibles pour permettre leur accrochage de façon séparable, **caractérisé en ce que** l'organe (6) de soutirage comprend un actionneur (11) pour commander sélectivement le déplacement du clapet (8) d'isolation vers sa position d'ouverture du circuit (5) de soutirage, en position d'accrochage du robinet (1) et de l'organe (6) de soutirage, l'actionneur (11) étant relié à la seconde extrémité (100) du circuit (10) de commande pour commander sélectivement le déplacement du clapet (8) d'isolation vers sa position d'ouverture selon l'état d'alimentation de l'actionneur (11).

12. Ensemble selon la revendication 11, **caractérisé en ce que** l'organe (6) de soutirage comprend un poussoir (17) commandé par l'actionneur (11), en position d'accrochage du robinet (1) et de l'organe (6) de soutirage, le poussoir (17) pénétrant sélectivement dans le circuit (10) de commande via la seconde extrémité (100) selon l'état d'alimentation de l'actionneur (1), pour déplacer le clapet (8) d'isolation vers sa position d'ouverture.

13. Ensemble selon la revendication 11 ou 12, **caractérisé en ce que** l'actionneur est du type électrique (11) comprend au moins l'un parmi : un électroaimant, une bobine d'induction.

14. Utilisation d'un ensemble selon l'une quelconque des revendications 11 à 13, **caractérisé en ce que** le robinet (1) possède une entrée (22) reliée fluidiquement au volume de stockage d'un ou plusieurs récipients (2) de gaz sous pression, dans lequel du gaz est soutiré du au moins un récipient (2) via :
- une étape d'accrochage mécanique de l'organe (6) de soutirage sur le robinet (1) via les organes (12, 21) d'attache mécaniques conjugués,
- une étape de déplacement de l'organe (18) de commande manuelle dans une troisième position neutre dans laquelle le clapet (8) d'isolation est déplaçable entre ses positions d'ouverture et de fermeture du circuit (5) de soutirage selon l'état du circuit (10) de commande et du éventuel actionneur (11) électrique relié au circuit (10) de commande,
- une étape d'alimentation électrique dudit actionneur (11) pour déplacer le clapet (8) d'isolation vers sa position d'ouverture du circuit (5) de soutirage.

## Patentansprüche

1. Leitungshahn, vor allem für einen unter Druck befindlichen Gasspeicherbehälter (2), einen Korpus (3) umfassend, der mit einem Gaseinlass (22) versehen ist, der dazu bestimmt ist, mit dem Speichervolumen eines Behälters (2) verbunden zu werden, eine Entnahmeleitung (5), die im Korpus (3) gebildet wird, und ein vorgelagertes Ende (15) umfasst, das dazu bestimmt ist, flüssigkeitstechnisch mit dem Speichervolumen eines Behälters (2) verbunden zu werden, und ein nachgelagertes Ende (25, 22), das dazu bestimmt ist, flüssigkeitstechnisch selektiv mit einem Gasentnahmeelement (6) verbunden zu werden, eine Füllleitung (7), die im Korpus (3) gebildet wird, und ein erstes Ende (70) umfasst, das dazu bestimmt ist, selektiv mit einem Füllelement des Behälters (2) verbunden zu werden, und ein zweites Ende (15), das dazu bestimmt ist, mit dem Speichervolumen des Behälters (2) verbunden zu werden, wobei die Entnahmeleitung (5) eine Trennklappe (8) und ein Element zur Druckentspannung (9) des entnommenen Gases auf einen festen oder einstellbaren bestimmten Druck umfasst, wobei der Leitungshahn (1) auch ein Element (18) zur manuellen Steuerung der Bewegung der Trennklappe (8) umfasst, wobei das Steuerelement (18) selektiv in eine erste Position und in eine zweite Position bewegt werden kann, wobei das Steuerelement (18) in seiner ersten Position die Trennklappe (8) in einer Öffnungsposition der Entnahmeleitung (5) anordnet, und das Steuerelement (18) in seiner zweiten Position die Trennklappe (8) in einer Schließposition der Entnahmeleitung (5) anordnet, **dadurch gekennzeichnet, dass** der Leitungshahn (1) darüber hinaus im Korpus (3) einen Steuerkreis (10) zum selektiven Bewegen der Trennklappe (8) in ihre erste Öffnungsposition der Entnahmeleitung (5) umfasst, wobei der Steuerkreis (10) ein erstes Ende umfasst, das mit der Klappe (8) verbunden ist, und ein zweites Ende (100), das selektiv mit einem Steller (11) des Gasentnahmeelements (6) verbunden werden kann, um elektrisch selektiv die Bewegung der Klappe (8) in ihre Öffnungsposition der Entnahmeleitung (5) anzusteuern.

2. Leitungshahn nach Anspruch 1, **dadurch gekennzeichnet, dass** die Trennklappe (8) und das Element (9) zur Druckentspannung des entnommenen Gases getrennte Elemente sind, und in Reihe in der Entnahmeleitung (5) angeordnet sind.

3. Leitungshahn nach Anspruch 1 oder 2, **dadurch gekennzeichnet, dass** die Trennklappe (8) auch ein Element zur selektiven Druckentspannung (9) des entnommenen Gases darstellt, wobei die Trennklappe (8) eine Klappe in der Art einer selektiv und durch einen getrennten Steller (11) proportional gesteuerten Klappe ist, um den Ausgangsdruck des entnommenen Gases selektiv zu regeln.

4. Leitungshahn nach irgendeinem der Ansprüche 1 bis 3, **dadurch gekennzeichnet, dass** der Steuerkreis (10) einen Durchlass umfasst, der im Korpus (3) des Leitungshahns (1) gebildet wird, und in den Bereich einer Eingangsöffnung (16) außerhalb des Korpus (3) mündet, wobei die Eingangsöffnung (16) ausgeformt ist, um im Korpus (3) einen beweglichen Schieber (17) aufzunehmen, der zu einem Steller (11) eines Elements zur Gasentnahme (6) gehört, um die Klappe (8) selektiv in ihre Öffnungsposition zu bewegen.

5. Leitungshahn nach Anspruch 4, **dadurch gekennzeichnet, dass** der Durchlass (10) des Steuerkreises (10), der sich zwischen der Eingangsöffnung (16) und der Trennklappe (8) befindet, zumindest ein mobiles Kraftübertragungsteil (19, 20) zur Übertragung einer Kraft des Schiebers (17) umfasst, das in die Eingangsöffnung (16) zur Trennklappe (8) hin eindringt, sodass die Bewegung der Trennklappe (8) in ihre Öffnungsposition in indirekter Form über das zumindest eine Übertragungsteil (19, 20) erfolgt, das durch einen Schieber (17) angetrieben wird.

6. Leitungshahn nach irgendeinem der Ansprüche 1 bis 5, **dadurch gekennzeichnet, dass**, wenn sich das Steuerelement (18) in seiner ersten Position befindet, die Trennklappe (8) unabhängig vom Zustand des Steuerkreises (10) und vom Zustand eines eventuellen Stellers (11), der mit dem Steuerkreises (10) verbunden ist, mechanisch in ihrer Öffnungsposition der Entnahmeleitung (5) blockiert wird.

7. Leitungshahn nach irgendeinem der Ansprüche 1 bis 6, **dadurch gekennzeichnet, dass**, wenn sich das Steuerelement (18) in seiner zweiten Position befindet, die Trennklappe (8) unabhängig vom Zustand des Steuerkreises (10) und vom Zustand eines eventuellen Stellers (11), der mit dem Steuerkreises (10) verbunden ist, mechanisch in ihrer Schließposition der Entnahmeleitung (5) blockiert wird.

8. Leitungshahn nach irgendeinem der Ansprüche 1 bis 7, **dadurch gekennzeichnet, dass** das Steuerelement (18) in eine dritte neutrale Position bewegt werden kann, in der die Trennklappe (8) je nach Zustand des Steuerkreises (10) und Zustand eines eventuellen Stellers (11), der mit dem Steuerkreises (10) verbunden ist, zwischen ihrer Öffnungsposition und ihrer Schließposition der Entnahmeleitung (5) bewegt werden kann.

9. Leitungshahn nach irgendeinem der Ansprüche 1 bis 8, **dadurch gekennzeichnet, dass** er ein Rückholelement (120) umfasst, das die Trennklappe (8) standardgemäß in ihre Schließposition der Entnahmeleitung (5) drückt.

10. Unter Druck befindlicher Gasspeicherbehälter, eine Öffnung umfassend, die mit einem Leitungshahn (1) nach irgendeinem der Ansprüche 1 bis 9 verbunden ist.

11. Einheit, einen Leitungshahn (1) nach irgendeinem der Ansprüche 1 bis 9, und ein Gasentnahmeelement (6) umfassend, das mit einer internen Gasleitung (14) versehen ist, wobei das Gasentnahmeelement (6) selektiv mechanisch mit dem Leitungshahn (1) verbunden werden kann, um eine flüssigkeitstechnische Verbindung der internen Gasleitung (14) mit dem nachgelagerten Ende (25) der Entnahmeleitung (5) des Leitungshahns (1) herzustellen, wobei der Leitungshahn (1) und das Gasentnahmeelement (6) gekoppelte und abnehmbare mechanische Befestigungselemente (12, 21) umfassen, um deren trennbare Ankoppelung zu ermöglichen, **dadurch gekennzeichnet, dass** das Entnahmeelement (6) einen Steller (11) umfasst, um in der Ankoppelposition des Leitungshahns (1) und des Entnahmeelements (6) selektiv die Bewegung der Trennklappe (8) in ihre Öffnungsposition der Entnahmeleitung (5) anzusteuern, wobei der Steller (11) mit dem zweiten Ende (100) des Steuerkreises (10) verbunden ist, um je nach Versorgungszustand des Stellers (11) selektiv die Bewegung der Trennklappe (8) in ihre Öffnungsposition anzusteuern.

12. Einheit nach Anspruch 11, **dadurch gekennzeichnet, dass** das Entnahmeelement (6) einen Schieber (17) umfasst, der in der Ankoppelposition des Leitungshahns (1) und des Entnahmeelements (6) durch den Steller (11) angesteuert wird, wobei der Schieber (17) je nach Versorgungszustand des Stellers (1) selektiv über das zweite Ende (100) in den Steuerkreis (10) eindringt, um die Trennklappe (8) in ihre Öffnungsposition zu bewegen.

13. Einheit nach Anspruch 11 oder 12, **dadurch gekennzeichnet, dass** der Steller ein elektrischer Steller (11) ist, der zumindest eines der folgenden Elemente umfasst: einen Elektromagneten, eine Induktionsspule.

14. Verwendung einer Einheit nach irgendeinem der Ansprüche 11 bis 13, **dadurch gekennzeichnet, dass** der Leitungshahn
(1) einen Eingang (22) besitzt, der flüssigkeitstechnisch mit dem Speichervolumen eines oder mehrerer unter Druck befindlicher Gasbehälter (2) verbunden ist, wobei aus dem zumindest einen Behälter
(2) durch folgende Schritte Gas entnommen wird:
- einen Schritt zum mechanischen Ankoppeln des Entnahmeelements (6) auf dem Leitungshahn (1) über die gekoppelten mechanischen Befestigungselemente (12, 21),
- einen Schritt zum Bewegen des manuellen Steuerelements (18) in eine dritte neutrale Position, in der die Trennklappe (8) je nach Zustand des Steuerkreises (10) und Zustand eines eventuellen Stellers (11), der mit dem Steuerkreises (10) verbunden ist, zwischen ihrer Öffnungsposition und ihrer Schließposition der Entnahmeleitung (5) bewegt werden kann,
- einen Schritt zur elektrischen Versorgung des besagten Stellers (11) zum Bewegen der Trennklappe (8) in ihre Öffnungsposition der Entnahmeleitung (5).

## Claims

1. Valve, in particular for a container (2) for storing pressurised gas, comprising a body (3) provided with a gas inlet (22) intended to be connected to the storage space of a container (2), a bleed-off circuit (5) formed in the body (3) and comprising an upstream end (15) intended to be fluidly connected to the storage space of a container (2) and a downstream end (25, 22) to be selectively fluidly connected with a gas bleed-off member (6), a filling circuit (7) formed in the body (3) and comprising a first end (70) intended to be selectively connected to a member for filling the container (2) and a second end (15) intended to be connected to the storage space of the container (2), with the bleed-off circuit (5) comprising an isolation valve (8) and a pressure-release member (9) of the gas bled off at a determined fixed or adjustable pressure, with the tap (1) also comprising a member (18) for manually controlling the movement of the isolation valve (8), with the member (18) for controlling able to be selectively moved into a first position and into a second position, in its first position, the member (18) for controlling having the isolation valve (8) in a position for opening the bleed-off circuit (5), in the second position thereof, the member (18) for controlling having the isolation valve (8) in a position for closing the bleed-off circuit (5), **characterised in that** the tap (1) further comprises, in the body (3), a circuit (10) for selectively controlling the movement of the isolation valve (8) into the first position thereof for opening the bleed-off circuit (5), with the control circuit (10) comprising a first end connected to the valve (8) and a second end (100) that can be selectively connected to an actuator (11) of the gas bleed-off member (6), in order to selectively electrically control the movement of the valve (8) into the position for opening the bleed-off circuit (5).

2. Tap according to claim 1, **characterised in that** the isolation valve (8) and the pressure-release member (9) of the bled off gas are separate elements and arranged in series in the bleed-off circuit (5).

3. Tap according to claim 1 or 2, **characterised in that** the isolation valve (8) also constitutes a selective pressure-release member (9) of the bled off gas, with the isolation valve (8) being a valve of the type selectively controlled proportionally by a separate actuator (11) in order to selectively adjust the outlet pressure of the bled off gas.

4. Tap according to any of claims 1 to 3, **characterised in that** the control circuit (10) comprises a passage formed in the body (3) of the tap (1) and opening outside of the body (3) on an inlet orifice (16), with the inlet orifice (16) being conformed to receive, in the body (3), a mobile tappet (17) belonging to an actuator (11) of a gas bleed-off member (6), in such a way as to selectively displace the valve (8) into the open position thereof.

5. Tap according to claim 4, **characterised in that** the passage (10) of the control circuit (10) located between the inlet orifice (16) and the isolation valve (8) comprises at least one mobile force transmitting part (19, 20) for transmitting a force from the tappet (17) penetrating into the inlet orifice (16) to the isolation valve (8), in such a way that the displacement of the isolation valve (8) into the open position thereof is carried out indirectly via the at least one transmission part (19, 20) actuated by a tappet (17).

6. Tap according to any of claims 1 to 5, **characterised in that**, when the member (18) for controlling is in the first position thereof, the isolation valve (8) is mechanically blocked in its opening position of the bleed-off circuit (5), regardless of the state of the control circuit (10) and the state of a possible actuator (11) connected to the control circuit (10).

7. Tap according to any of claims 1 to 6, **characterised in that**, when the member (18) for controlling is in the second position thereof, the isolation valve (8) is mechanically blocked in its closing position of the bleed-off circuit (5), regardless of the state of the control circuit (10) and the state of a possible actuator connected to the control circuit (10).

8. Tap according to any of claims 1 to 7, **characterised in that** the member (18) for controlling can be displaced into a third neutral position wherein the isolation valve (8) can be displaced between the opening and closing positions thereof of the bleed-off circuit (5) according to the state of the control circuit (10) and of a possible actuator (11) connected to the control circuit (10).

9. Tap according to any of claims 1 to 8, **characterised in that** it comprises a return member (120) that by default urges the isolation valve (8) towards its closing position of the bleed-off circuit (5).

10. Container for storing pressurised gas comprising an orifice connected to a tap (1) in accordance with any one of claims 1 to 9.

11. Unit comprising a tap (1) in accordance with any one of claims 1 to 9 and a gas bleed-off member (6) provided with an internal gas circuit (14), the bleed-off member (6) able to be selectively connected to the tap (1) in order to carry out a fluidic connection of the internal gas circuit (14) with the downstream end (25) of the bleed-off circuit (5) of the tap (1), the tap (1) and the bleed-off member (6) comprising mechanical attachment members (12, 21) that are conjugated and removable in order to allow them to be attached in a separable manner, **characterised in that** the bleed-off member (6) comprises an actuator (11) for selectively controlling the movement of the isolation valve (8) into the position for opening the bleed-off circuit (5), in the attached position of the tap (1) and of the bleed-off member (6), with the actuator (11) being connected to the second end (100) of the control circuit (10) for selectively controlling the movement of the isolation valve (8) into its opening position according to the state of supply of the actuator (11).

12. Unit according to claim 11, **characterised in that** the bleed-off member (6) comprises a tappet (17) controlled by the actuator (11), in the attached position of the tap (1) and of the bleed-off member (6), with the tappet (17) selectively penetrating into the control circuit (10) via the second end (100) according to the state of supply of the actuator (1), in order to displace the isolation valve (8) into the opening position thereof.

13. Unit according to claim 11 or 12, **characterised in that** the actuator is of the electric type (11) comprises at least one from: an electromagnet, an induction coil.

14. Use of a unit according to any of claims 11 to 13, **characterised in that** the tap (1) has an inlet (22) fluidly connected to the storage space of one or several containers (2) of pressurised gas, wherein gas is bled off from the at least one container (2) via:
- a step of mechanically attaching the bleed-off member (6) on the tap (1) via the conjugated mechanical attachment members (12, 21),
- a step of displacing of the manual control member (18) into a third neutral position wherein the isolation valve (8) can be moved between its opening and closing positions of the bleed-off circuit (5) according to the state of the control circuit (10) and of the possible electric actuator (11) connected to the control circuit (10),
- a step of electrically supplying said actuator (11) in order to displace the isolation valve (8) into the position for opening the bleed-off circuit (5).
